# EUROPEAN PATENT APPLICATION

(11) **EP 4 477 367 A1**
(43) Date of publication of application: **18.12.2024**
(21) Application number: 24171434.4
(22) Date of filing: 19.04.2024
(51) Int. Cl.: B25J 15/00, B65G 47/90

(54) **GRIPPING HEAD FOR THE MOVEMENT OF PRODUCTS AND MOVEMENT DEVICE WHICH COMPRISES IT**

(30) Priority: 16.06.2023 IT 202300012417
(71) Applicant: G. Mondini SpA, 25033 Cologne Bresciano (BS) (IT)
(72) Inventor: MONDINI, Paolo Carlo, 25033 COLOGNE BS (IT); TISI, Fulvio Fausto, 24055 COLOGNO AL SERIO BG (IT)
(74) Representative: Ponchiroli, Simone

(57) **Abstract**

A gripping head and device which comprises it, wherein the head comprises a supporting body and an operating body comprises first retaining means positioned at a first side and second retaining means positioned at a second side, between which there is a housing for the product to be moved. The operating body is rotatably mounted on the supporting body for rotating by an angle of 180° and directing downwards alternatively the first retaining means or the second retaining means for releasing the products with unchanged orientation or overturned. Both the first retaining means, and the second retaining means are switchable between an open configuration in which they allow the passage of the product from and towards the housing, and a closed configuration in which they prevent the passage of the product.

## Description

This invention relates to a gripping head for the movement of products and a movement device which comprises it.

This invention was initially developed for the sector of packaging in tins whole fresh fillets of fish (such as salmon fillets), but may be applied for the movement of any other product for which the features of the new gripping head disclosed are advantageous. Therefore, hereinafter reference will be made to the packaging of salmon fillets by way of example only.

At present, while operations for preparing fillets are highly automated, the final step of inserting the fillets in tins (each of which is intended to contain multiple fillets), is still an operation performed manually by an operator. Indeed, in many circumstances, there is the need to package the fillets of fish by placing the skin in contact with the skin and the flesh in contact with the flesh. Moreover, in order to make the best possible use of the space inside the tins and take into account the thickness of the fillets which decreases from the head to the tail of the fish, it is often necessary to alternate the "head - tail" orientation of the fillets in each layer.

In this context the technical purpose which forms the basis of this invention is to provide a gripping head for the movement of products, and a movement device which comprises it, which allow mechanisation of the packaging operations described above which are currently performed by operators.

The technical purpose specified and the aims indicated are substantially achieved by a gripping head for the movement of products and a movement device which comprises it, as defined in independent claim 1 and in claim 18. Particular embodiments of this invention are defined in the corresponding dependent claims.

Further features and the advantages of this invention will be more apparent from the detailed description of several preferred, non-limiting embodiments of a gripping head for the movement of products, and a movement device which comprises it, illustrated with reference to the accompanying drawings, in which:
- Figure 1 is a schematic view of a movement device according to this invention;
- Figure 2 is an axonometric top view of a preferred embodiment of a gripping head according to this invention in a conveying configuration;
- Figure 3 is a front view of the gripping head of Figure 2;
- Figure 4 is an axonometric bottom view of the gripping head of Figure 2;
- Figure 5 is an enlarged view of a detail of Figure 4;
- Figure 6 is a front view of the gripping head of Figure 2 in an intermediate configuration between the conveying configuration of Figure 2 and a pick-up configuration;
- Figure 7 is an axonometric bottom view of the gripping head of Figure 6;
- Figure 8 is a front view of the gripping head of Figure 2 in a pick-up configuration;
- Figure 9 is an axonometric top view of the gripping head of Figure 8;
- Figure 10 is an enlarged view of a detail of Figure 9;
- Figure 11 is an axonometric bottom view of the gripping head of Figure 8;
- Figure 12 is an axonometric top view of the gripping head of Figure 2 in a first unloading configuration;
- Figure 13 is an enlarged view of a detail of Figure 12;
- Figure 14 is an axonometric bottom view of the gripping head of Figure 12;
- Figure 15 is an enlarged view of a detail of Figure 14;
- Figure 16 is a front view of the gripping head of Figure 12;
- Figure 17 is an axonometric top view of the gripping head of Figure 2 in a second unloading configuration;
- Figure 18 is a front view of the gripping head of Figure 17;
- Figure 19 is an axonometric bottom view of the gripping head of Figure 17;
- Figure 20 is an enlarged view of a detail of Figure 19;
- Figure 21 is an axonometric top view of the gripping head of Figure 2 in a possible product locking configuration;
- Figure 22 is an enlarged view of a detail of Figure 21;
- Figure 23 is an axonometric bottom view and from the opposite side of the gripping head of Figure 21;
- Figure 24 is an enlarged view of the detail XXIV of Figure 23; and
- Figure 25 is an axonometric top view of a detail visible in Figure 24.

With reference to the above-mentioned figures the reference number 1 denotes in its entirety a gripping head for the movement of products according to this invention. In contrast, the reference number 2 indicates a movement device 2 which comprises the gripping head 1.

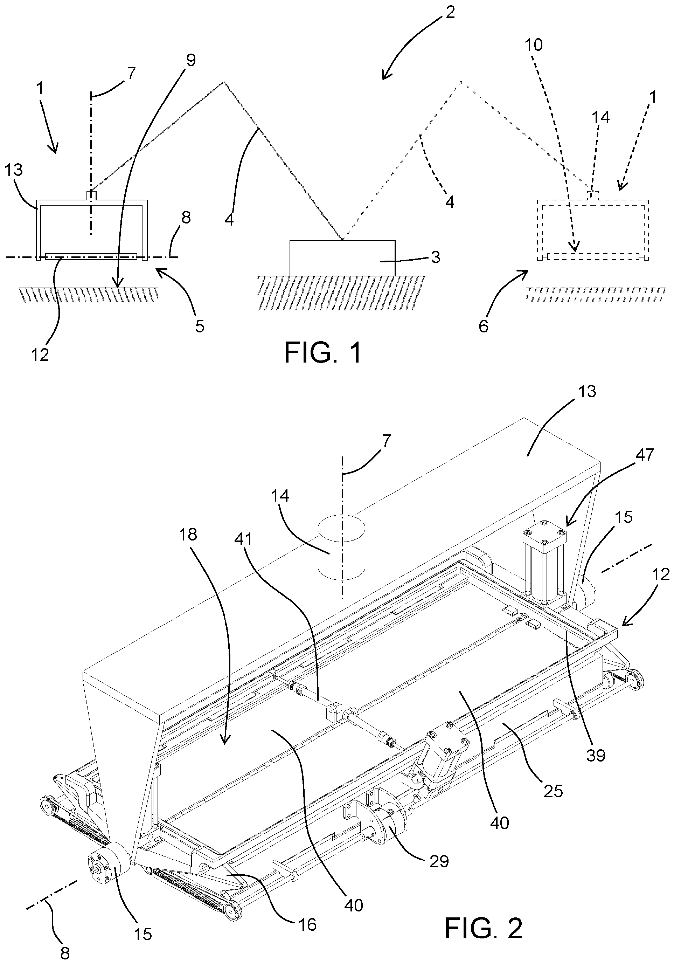

The movement device 2 is schematically shown in Figure 1 and in general comprises a supporting structure 3 on which a movable member 4 which supports the gripping head 1 is mounted. Although the movable member 4 may be of any type, in a preferred embodiment it is a robot arm as schematically shown in Figure 1.

The movable member 4 is movable between a pick-up position (solid line in Figure 1), at which the gripping head 1 is placed at a pick-up station 5, and a releasing position (broken line in Figure 1) at which the gripping head 1 is placed at a releasing station 6.

Moreover, advantageously, the gripping head 1 is rotatably connected to the movable member 4 along a secondary axis of rotation 7 orthogonal to a main axis of rotation 8 of the gripping head 1 (described below), so as to be able to rotate at least 180° around the secondary axis of rotation 7, preferably 360°. When the gripping head 1 is at the pick-up station 5 or the releasing station 6, the secondary axis of rotation 7 is advantageously perpendicular respectively to a pick-up plane 9 from which the products must be picked up, and to a releasing plane 10 on which the products must be released. In the accompanying figures the products are not shown.

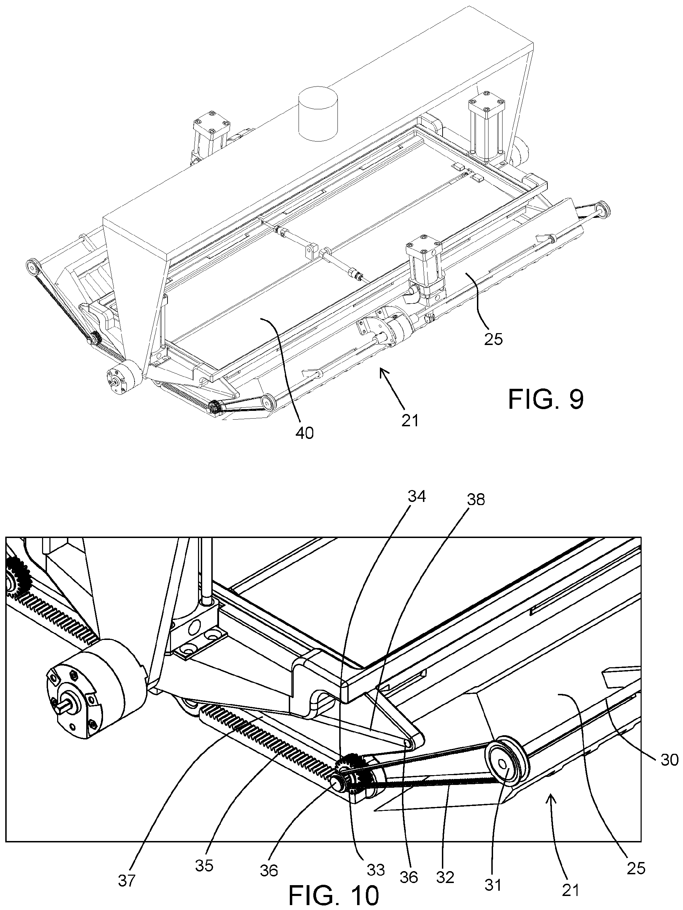

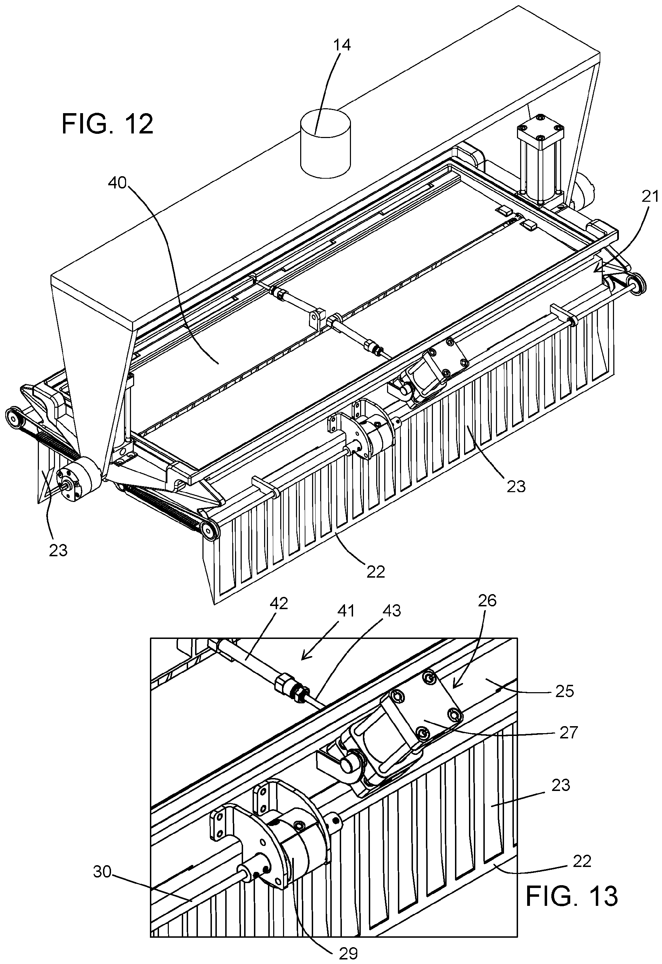

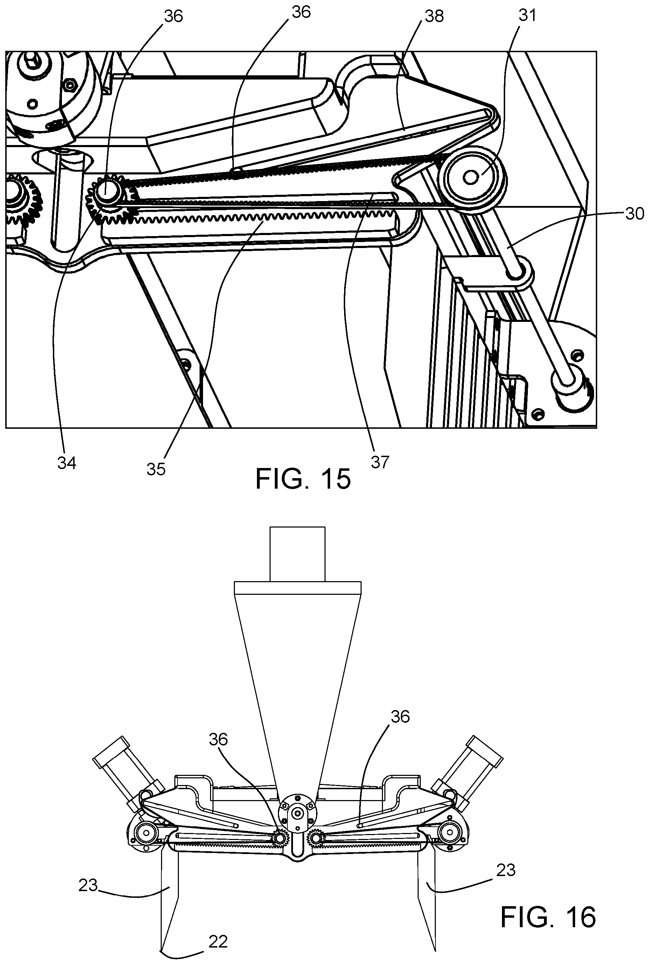

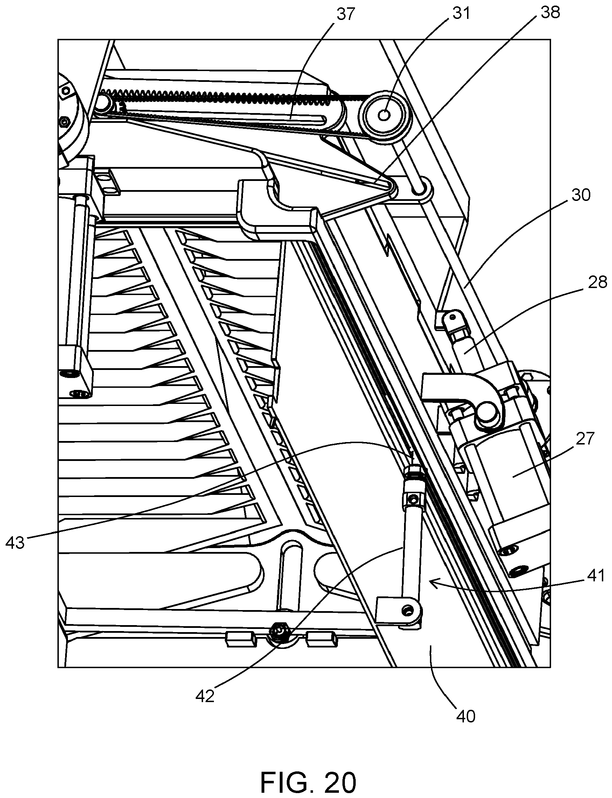

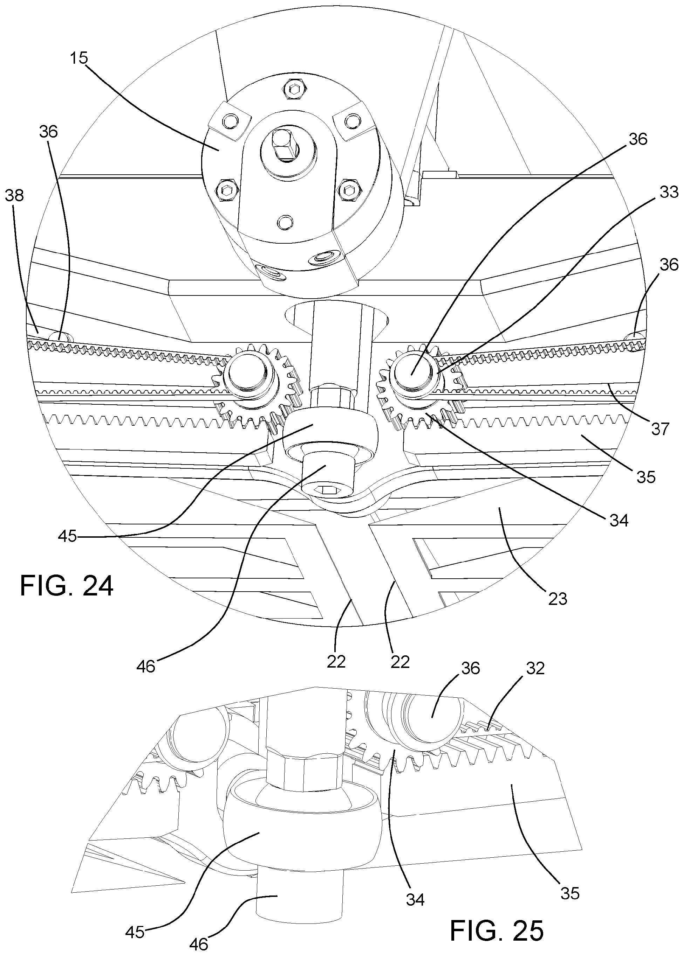

A preferred embodiment of the gripping head 1 according to this invention is illustrated in detail in Figures 2 to 25.

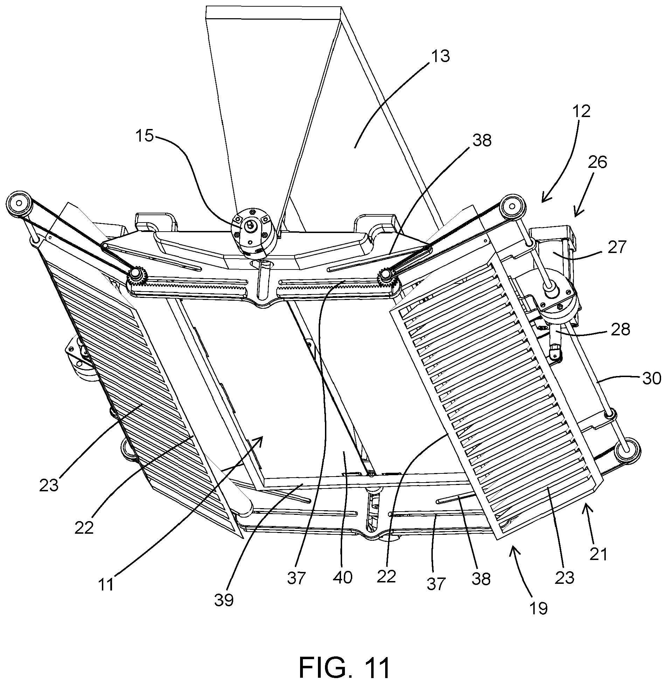

Figure 11 shows the gripping head 1 in a pick-up configuration, which it adopts before picking up the product at the pick-up station 5. In contrast, Figure 1 shows the gripping head 1 in a conveying configuration, which is adopted in the pick-up station 5 for enclosing the product in a housing 11 defined inside the gripping head 1 itself, and which is held until at the releasing station 6.

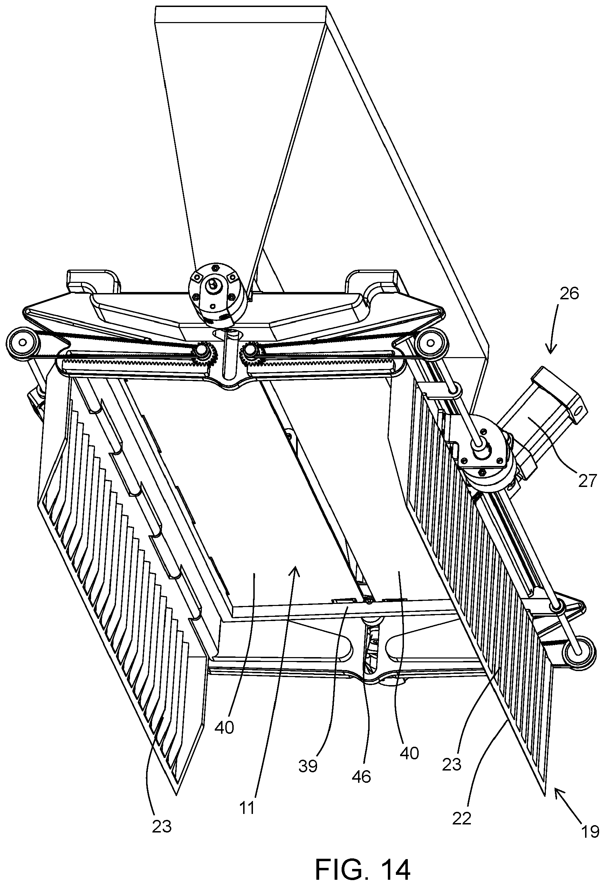

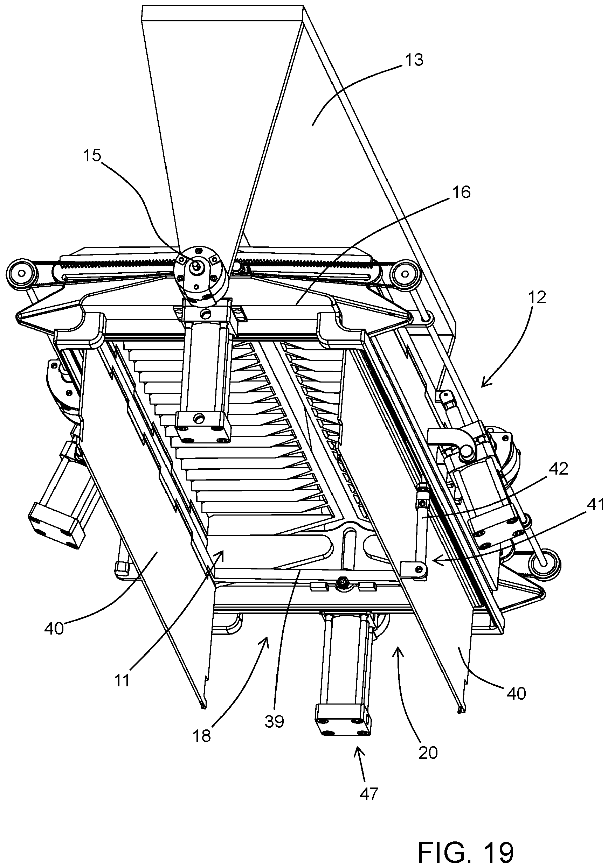

In contrast, Figures 14 and 19 show two different releasing configurations which can be adopted by the gripping head 1, which differ mainly due to the fact that an operating body 12 of the head, inside which the housing 11 is defined, is rotated 180° around the main axis of rotation 8.

Indeed, in accordance with a first innovative aspect of this invention, the gripping head 1 is configured to release the product either with the same orientation with which it picked it up, or overturned.

For that purpose, the gripping head 1 comprises a supporting body 13 and the operating body 12.

The supporting body 13 is mountable on the movable member 4 of the movement device 2 for the movement of the products and, in the embodiment illustrated, has a fork shape and a connecting element 14 for connecting to the movable member 4. In use, the fork is directed downwards at least when the gripping head 1 is placed at the pick-up station 5 or the releasing station 6.

The operating body 12 is connected to the supporting body 13 and, in particular, is rotatably mounted on the supporting body 13 according to the main axis of rotation 8.

In some embodiments, such as that illustrated in the accompanying figures, the rotation of the operating body 12 relative to the supporting body 13 is obtained by means of a pair of main electric motors 15, mounted on the supporting body 13 (on the two arms of the fork in the accompanying figures) and active on the operating body 12 (in particular on two hinge pins hinging the operating body 12 to the supporting body 13, which are not visible in the Figures).

The operating body 12 comprises a main frame 16 and has a first operating side 17 and a second operating side 18 which are positioned on opposite sides of the operating body 12 itself. As explained in more detail below, the first operating side 17 and the second operating side 18 are the portions of the gripping head 1 intended to perform the product pick-up and releasing operations. In the preferred embodiment the first operating side 17 and the second operating side 18 are the sides of the operating body 12 with the greatest extent, but this is not a binding aspect.

The first operating side 17 and the second operating side 18 identify respective lying planes which are substantially parallel to each other and to the main axis of rotation 8. When the gripping head 1 is at the pick-up station 5 or the releasing station 6, the lying planes of the first operating side 17 and of the second operating side 18 are also advantageously parallel, respectively, to the pick-up plane 9 and to the releasing plane 10.

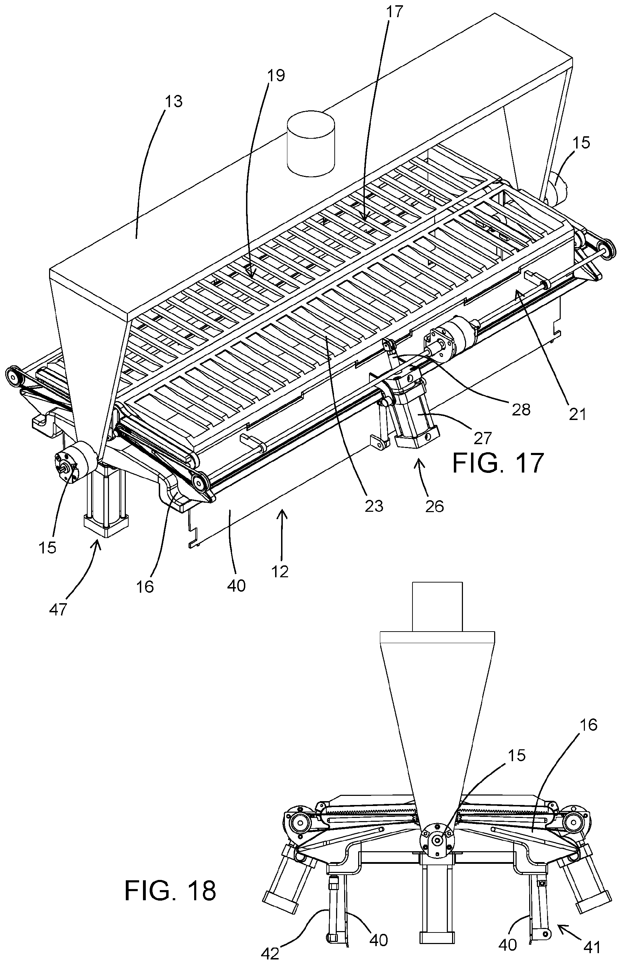

The operating body 12 can rotate relative to the supporting body 13 at least by an angle of 180° around the main axis of rotation 8, between a first position, at which the gripping head 1 can pick up and/or release a product at the first operating side 17 (Figure 2), and a second position (Figure 17), at which the gripping head 1 can pick up and/or release the product at the second operating side 18 of the operating body 12 (in the embodiment illustrated in the second position only releasing occurs). When the operating body 12 is in the first position and the gripping head 1 is placed at, respectively, the pick-up station 5 or the releasing station 6, the first operating side 17 is facing respectively, the pick-up station 5 or the releasing station 6. When the operating body 12 is in the second position and the gripping head 1 is placed at, respectively, the pick-up station 5 or the releasing station 6, the second operating side 18 is facing respectively, the pick-up station 5 or the releasing station 6.

The operating body 12 also comprises first retaining means 19 associated with the main frame 16 and positioned at the first operating side 17, and second retaining means 20 associated with the main frame 16 and positioned at the second operating side 18.

Between the first retaining means 19 and the second retaining means 20 there is the housing 11 for the product to be moved. In the embodiment illustrated in the accompanying figures the housing 11 as a whole substantially has the shape of a parallelepiped with reduced height, and is delimited, on the two larger sides by the first retaining means 19 and by the second retaining means 20, and on the smaller sides by the main frame 16 (which constitutes a sort of surround which surrounds the housing 11).

The first retaining means 19 are switchable between a first open configuration in which they allow the passage of the product from and towards the housing 11 (to allow pick-up and releasing), and a first closed configuration in which they prevent the passage of the product (to retain the product in the housing 11).

In some preferred embodiments, such as that illustrated in the accompanying figures, the first retaining means 19 can adopt two different first open configurations. As is explained in more detail below, one first open configuration is configured to allow optimum product pick-up, whilst the other is configured to allow optimum releasing.

The second retaining means 20 are also switchable between a second open configuration, in which they allow the passage of the product from and towards the housing 11, and a second closed configuration, in which they prevent the passage of the product.

Although in the preferred embodiments the first retaining means 19 and the second retaining means 20 have different structures and the second retaining means 20 are configured to adopt a single second open configuration, in other embodiments it is possible that the first retaining means 19 and the second retaining means 20 have similar or identical structures, and/or that the first retaining means 19 are also configured to adopt a single first open configuration, and/or that the second retaining means 20 are also configured to adopt two different second open configurations.

Advantageously, the first retaining means 19 comprise two retaining elements 21 which are movable between an operating position, in which they are near, and a home position in which they are spaced apart.

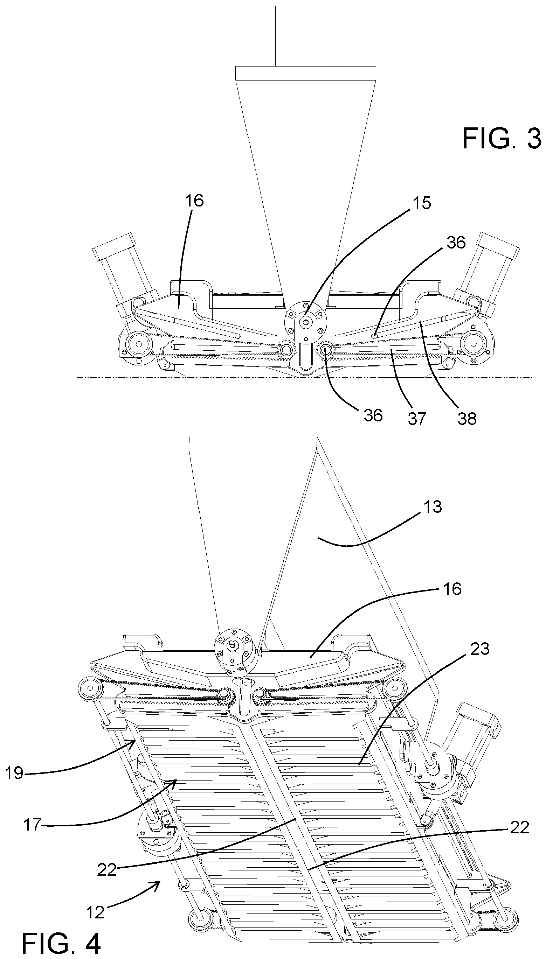

When the retaining elements 21 are in the home position, the first retaining means 19 are in the first open configuration (Figure 11). In contrast, when the retaining elements 21 are in the operating position, the first retaining means 19 are certainly in the first closed configuration only in the cases in which there is a single first open configuration. In contrast, in cases in which there are two first open configurations, when the retaining elements 21 are in the operating position, the first retaining means 19 can adopt either a first closed configuration (Figure 4), or the other first open configuration (Figure 14).

In some embodiments, each retaining element 21 has a front edge 22 directed towards the other retaining element 21, and the two front edges 22 extend along parallel straight lines. In the embodiment illustrated, the two front edges 22 are defined by first doors 23, which are part of the first retaining means 19 and are described in more detail below.

The two retaining elements 21 are movable relative to each other along respective movement trajectories which comprise a component of translation parallel to the lying plane of the first operating side 17. In particular, that component of translation is advantageously perpendicular to the lines along which the front edges 22 extend.

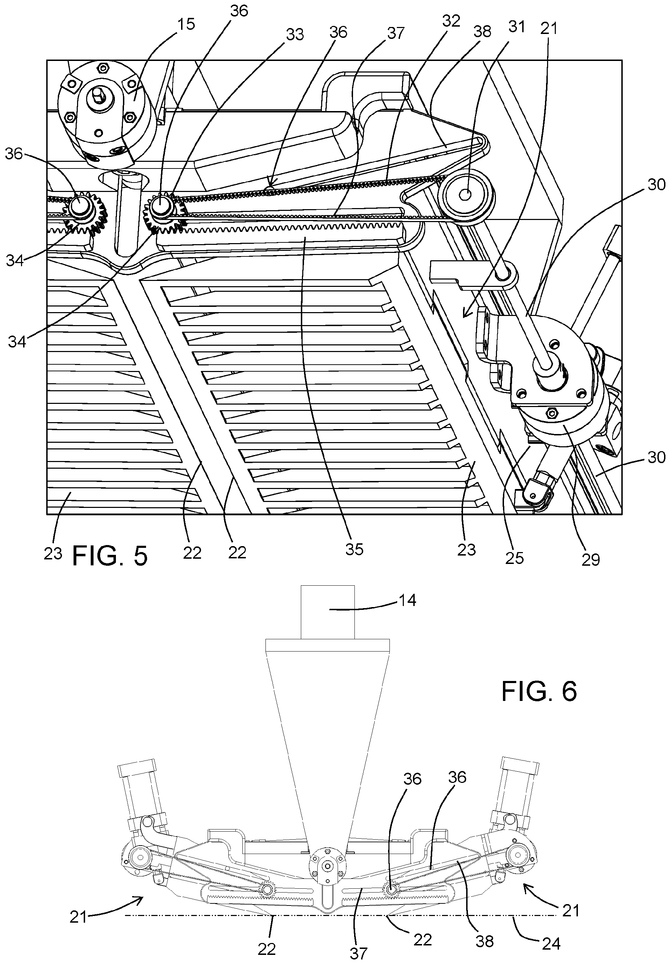

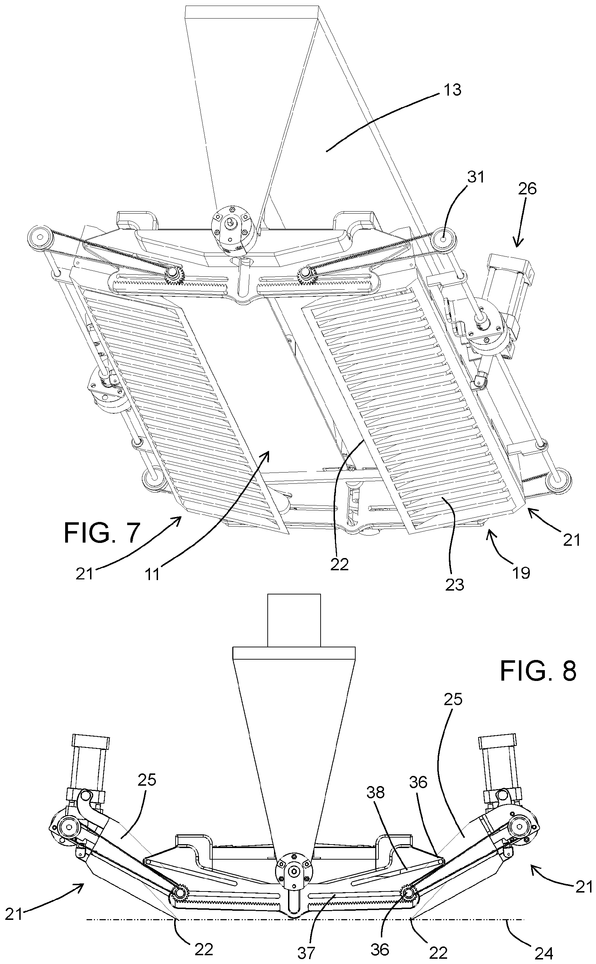

With reference to the accompanying figures, and in particular to Figures 3, 6 and 8 which, in this order, show the shifting of the retaining elements 21 from the operating position (Figure 3) to the home position (Figure 8), passing through an intermediate position (Figure 6), the line along which the front edges 22 extend is perpendicular to the plane of the drawing, whilst the component of translation is parallel to the plane indicated by the dash - double dot line. It should also be noticed that Figures 3, 6 and 8, if considered in reverse order, show the shifting of the retaining elements 21 from the home position (Figure 8) to the operating position (Figure 3), passing through the intermediate position (Figure 6).

According to some preferred embodiments, such as that illustrated in the accompanying figures, during the movement of the retaining elements 21 between the operating position and the home position, the front edges 22 always translate substantially in a same translating plane 24 parallel to the lying plane of the first operating side 17 (the plane indicated by the dash - double dot line in Figures 3, 6 and 8). In the embodiment illustrated in the accompanying figures, with respect to a translation of 300 mm, the shifting of the front edges perpendicularly to the translating plane 24 is less than 0.45 mm. In the context of this invention it is considered that the front edges 22 remain substantially in the translating plane 24 when the shifting perpendicularly to the plane itself is less than 1% of the translating stroke, preferably less than 0.5% and even more preferably less than 0.15%.

In some embodiments, the retaining elements 21 are configured in such a way that, during the movement between the home position and the operating position, the retaining elements 21 each perform a roto-translation relative to the main frame 16. Moreover, advantageously, the retaining elements 21 move in a synchronised way and specularly between the home position and the operating position.

That is particularly advantageous for product pick-up; with the gripping head 1 placed at the pick-up station 5 and the lying plane of the first operating side 17 positioned horizontal, when the retaining elements 21 are in the home position, they are tilted relative to the horizontal plane in such a way that the front edges 22 are at a lower height than the rest of the first doors 23. In contrast, the first doors 23 are substantially at the same horizontal height when the retaining elements 21 are in the operating position. In this way, by making the above-mentioned translating plane 24 (the plane indicated by the dash - double dot line in Figures 3, 6 and 8) coincide with the pick-up plane 9, in the passage from the home position to the operating position, the retaining elements 21 perform a product loading movement during which the front edges substantially slide along the pick-up plane 9, with the result of lifting the product to be loaded and centring it in the housing 11. To optimise product pick-up even more, in the embodiment illustrated the retaining elements 21 also have a tapered shape at the part closest to the front edges 22 proceeding towards the front edges 22 themselves.

In some embodiments, the opposite movement of the retaining elements 21, from the operating position to the home position, can be used to release the product (therefore using a first open configuration).

However, in some preferred embodiments, the release of the product at the first operating side 17 occurs in a different way (using the other first open configuration).

For that purpose, the first retaining means 19 comprise two first doors 23 which are each rotatable around a respective first axis of rotation, between a respective first closed position (Figure 4), and a respective first open position (Figure 14). Advantageously the first axes of rotation are parallel to each other and are also parallel to the lying plane of the first operating side 17. The first doors 23 are also substantially specular.

In the embodiments in which both the movable retaining elements 21 and the movable first doors 23 are present, each retaining element 21 comprises a first frame 25 and one of the first doors 23.

The first frame 25 of each retaining element 21, which in the accompanying figures is C-shaped in plan view) is movably connected to the main frame 16, and can move between the home position and the operating position, whilst the relative first door 23 is hinged to the first frame 25 according to the respective first axis of rotation and can rotate, relative to the first frame 25, between the first closed position and the first open position.

Advantageously, the rotation of the first door 23 from the first closed position to the first open position, and vice versa, only occurs while the retaining element 21 is in the operating position, whilst the first door 23 remains in the first closed position when the retaining element 21 is in other positions.

In the preferred embodiment illustrated in the accompanying figures, therefore:
each first door 23 can rotate between the first closed position and the first open position when the respective retaining element 21 is in the operating position;
the retaining elements 21 can move between the operating position and the home position when the first doors 23 are in the respective first closed positions;
the first retaining means 19 are in the first closed configuration when the retaining elements 21 are in the operating position and the first doors 23 are in the first closed position; and
the first retaining means 19 can adopt two different first open configurations: a first open configuration in which the retaining elements 21 are in the operating position and the first doors 23 are in the first open positions and a first open configuration in which the retaining elements 21 are in the home position (and the first doors 23 in the respective first closed positions).

However, it should be noticed that there are also embodiments in which the first retaining means 19 do not comprise the movable retaining elements 21 but only a first frame 25 and the first doors 23 hinged to the first frame 25; in that case the structure will be similar to that described below for the second retaining means 20.

In the embodiment illustrated in the accompanying figures, the movement of each of the first doors 23 relative to the respective first frame 25 is managed by means of a first straight actuator 26 which comprises a first jacket 27 fixed to the first frame 25 and a first piston 28 connected to the first door 23.

In contrast, the movement of each first retaining element 21 relative to the main frame 16 is managed by means of a first motor 29 (electric or pneumatic) fixed to the first frame 25 which is connected to a driving shaft 30 which extends parallel to the front edges 22 for just over the whole length of the retaining element 21 (Figure 5). At each end, and cantilever-style relative to the first frame 25, mounted on the driving shaft 30 there is a first pulley 31 connected by a driving belt 32 to a second pulley 33 which is idly mounted on the first frame 25. Advantageously, the first pulley 31, the second pulley 33 and the driving belt 32 are toothed to guarantee precise control of their positions. Mounted on the same shaft as the second pulley 33, and rotating with it, there is a gear wheel 34 which meshes with a rack 35 fixed to the main frame 16. The rotation of the first motor 29 therefore causes the rotation of the gear wheel 34 which, rolling on the rack 35, causes the component of translation of the retaining element 21 relative to the main frame 16.

Furthermore, each retaining element 21 comprises two pairs of sliding pins 36, with the sliding pins 36 of each pair aligned along a line parallel to the driving shaft 30 and mounted one on a front face and one on a rear face of the retaining element 21. The sliding pins 36 are slidably engaged in grooves made in the main frame 16. Advantageously, the sliding pins 36 of one of the two pairs are constituted of the shafts of the second pulleys and slide in first grooves 37 which in the embodiment illustrated are straight and have a first inclination relative to the translating plane 24. In contrast, the sliding pins 36 of the other pair slide in second grooves 38 which in the embodiment illustrated are straight and have a second inclination relative to the translating plane 24. In the accompanying figures the second inclination is greater than the first inclination in order to obtain the movement described above of the two front edges 22. Indeed, in general, the trajectories of extension of the first grooves 37 and of the second grooves 38 are selected in such a way that the front edges 22 always remain substantially in the same translating plane 24; in particular, using grooves which are not straight but with suitably configured curved development, it is possible to also ensure that the front edges 22 always remain precisely in the same translating plane 24.

It should be noticed that every technical aspect of what was described above relating to the structure of the first retaining means 19 shall be considered an independent innovative aspect of this invention which could also be applied independently and which the Applicant reserves the right to protect independently. In particular, the following constitute independent innovative aspects: the way in which the retaining elements 21 move with the front edges 22 moving whilst remaining substantially in a same translating plane 24, and the presence of two different first open configurations; indeed both of these technical solutions may also be applied in gripping heads without a rotating operating body 12 and/or second retaining means 20.

The second retaining means 20, associated with the second operating side 18 of the operating body 12, comprise a second frame 39 connected to the main frame 16 and at least one second door 40 mounted on the second frame 39 and movable, relative to the second frame 39, between a second closed position, which it adopts when the second retaining means 20 are in the second closed configuration, and a second open position, which it adopts when the second retaining means 20 are in the second open configuration. In the preferred embodiments, the second retaining means 20 comprise two second doors 40 hinged to two opposite edges of the second frame 39, along respective second axes of rotation which are parallel to each other. Preferably the second doors 40 are substantially specular.

Each second door 40 can rotate, relative to the second frame 39, between the second closed position and the second open position around the respective second axis of rotation.

The movement of each second door 40 relative to the second frame 39 is managed by a second straight actuator 41 which comprises a second jacket 42 fixed to the second door 40 and a second piston 43 rotatably connected to the second frame 39.

In some embodiments the second frame 39 is constituted of the main frame 16 or is rigidly fastened and fixed to it.

Otherwise, in accordance with a further innovative aspect of this invention, which is also independent of the others and not necessarily linked to the specific structure of the first retaining means 19 and of the second retaining means 20, in some embodiments the second retaining means 20 are movable relative to the first retaining means 19 between a spaced apart position, which corresponds to a maximum size of the housing 11 (Figures 2 to 20), and a near position which corresponds to a minimum size of the housing 11 (not illustrated). Advantageously, the shifting necessary to pass between the spaced apart position and the near position is a translation of the second retaining means 20 perpendicularly to the lying plane of the first operating side 17.

That technical solution has the aim of allowing the gripping head 1 to adopt a product locking configuration in which it clamps the product between the first retaining means 19 and the second retaining means 20, so as to hold the product still during the rotation of the operating body 12.

In some embodiments, the second retaining means 20 are also configured to tilt relative to the first retaining means 19 and to adopt any position between the spaced apart position and the near position, that is to say, to adopt any position and any inclination remaining in the space between that which they occupy when they are in the spaced apart position and that which they occupy when they are in the near position.

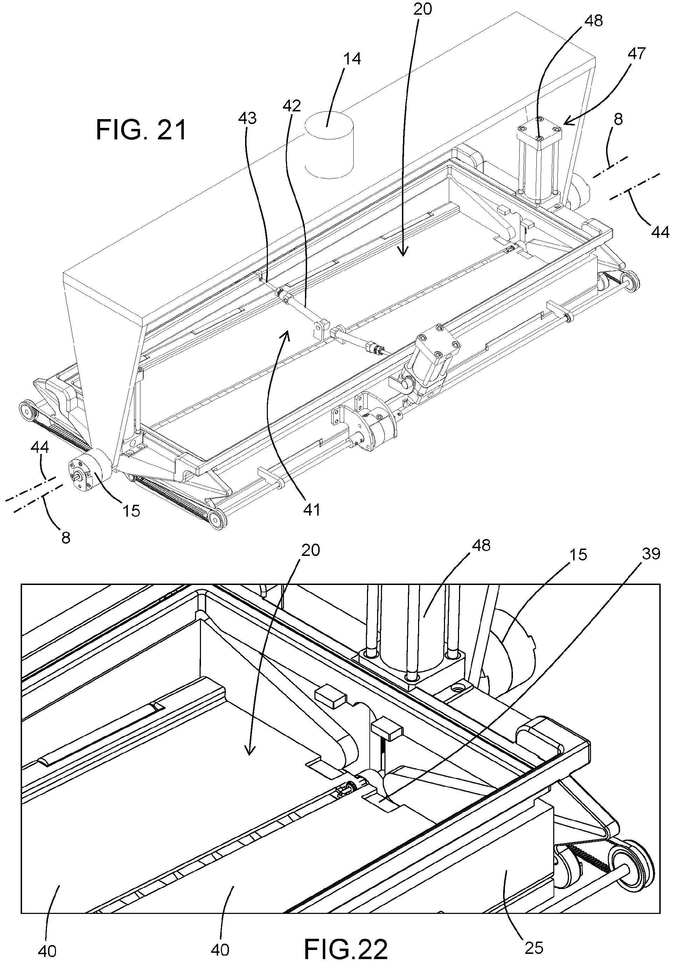

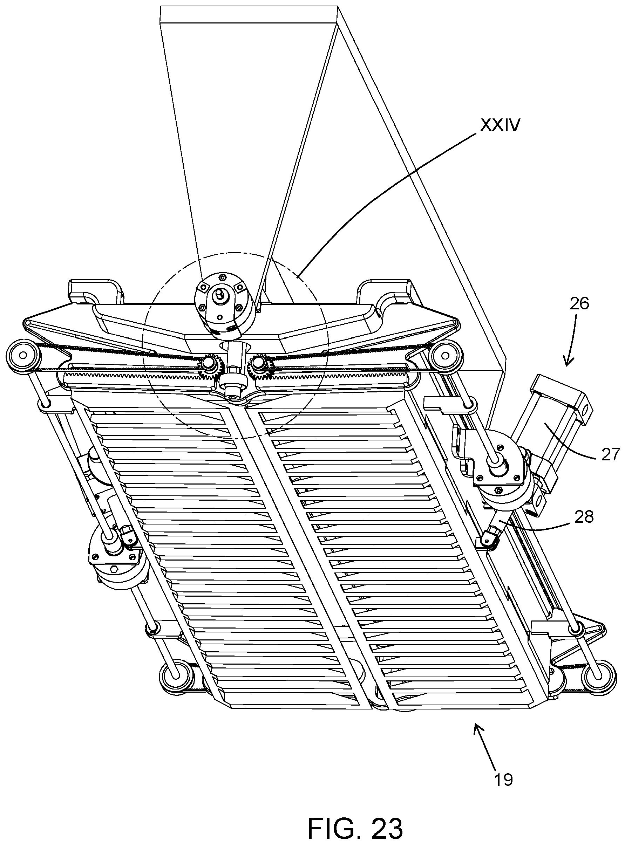

In the embodiments described, in which the second retaining means 20 comprise the second frame 39, the movement of the second retaining means 20 is obtained thanks to the fact that the second frame 39 is movable relative to the main frame 16, between the spaced apart position and the near position. In particular, in accordance with a preferred embodiment illustrated in Figures 23 to 25, the second frame 39 is connected to the main frame 16 in such a way as to be able to oscillate around an axis of oscillation 44 (Figure 21) whose ends can also translate independently of each other, perpendicularly to the lying plane of the first operating side 17. The figures illustrate in particular a situation in which the two ends of the axis of oscillation 44 are in the two opposite limit positions which they can adopt along the respective strokes. The end furthest from the observer is in the position closest to the first retaining means 19, whilst the closest end (hidden from view by the presence of the main frame 16) is in the position furthest from the first retaining means 19. In other words, the two ends are in the same position that they adopt when the second retaining means 20 are, respectively, in the near position and in the spaced apart position.

The spaced apart position is that illustrated in Figure 1, whilst the near position would be obtained if both sides of the second frame 39, and therefore both ends of the axis of oscillation 44, were in the position in which the visible side is in Figure 22.

Advantageously, to obtain what was described above, the second frame 39 is connected to the main frame 16 by means of two connecting joints 45 which are placed on opposite edges of the second frame 39 and are aligned along an alignment line which coincides with the axis of oscillation 44. Each connecting joint 45 is movable, independently of the other connecting joint 45, perpendicularly to the lying plane of the first operating side 17. Both of the connecting joints 45 are configured to allow an oscillation of the second retaining means 20, both around the axis of oscillation 44, and around an axis perpendicular to it and parallel to the lying plane of the second operating side 18. In the accompanying figures, the connecting joints 45 are two ball joints supported by third pistons 46 of respective third linear actuators 47, whose third jackets 48 are fixed to the main frame 16.

Operation of the gripping head 1 illustrated in the accompanying figures can easily be inferred from what was described above.

In order to pick up a product, the gripping head 1 is brought to the pick-up station 5 with the operating body 12 in the first position, the retaining elements 21 in the home position and the second retaining means 20 in the closed position (pick-up configuration). The translating plane 24 is substantially made to coincide with the pick-up plane 9, in such a way that the product is between the two retaining elements 21.

The two retaining elements 21 are then moved to the operating position; during the shifting the front edges 22, and the first doors 23, are slipped under the product, gather it up and finally close it in the housing 11.

The gripping head 1 can then be shifted to the releasing station 6.

If the product is to be released with the same orientation as that with which it was picked up, the operating body 12 remains still relative to the supporting body 13.

In contrast, if the product is to be released with the opposite orientation to that with which it was picked up (that is to say, overturned), before the gripping head 1 is ready to release the product (advantageously during shifting between the pick-up station 5 and the releasing station 6), the operating body 12 is rotated around the main axis of rotation from the first position to the second position.

Advantageously, if it is appropriate for the product to stay still during the movement of the gripping head 1, and in particular in the case of rotation of the operating body 12, before performing those movements the second retaining means 20 are pushed towards the near position until the product opposes their further forward movement. In particular, each connecting joint 45 is pushed independently.

When the gripping head 1 is at the releasing station 6, depending if it is facing the releasing station with the first side 17 or with the second side, the first doors 23 or the second doors 40 are activated, respectively, to bring them, respectively, from the first closed position to the first open position or from the second closed position to the second open position, so as to allow the product to fall.

Advantageously, according to this invention, both the shifting of the first doors 23 from the first closed position to the first open position, and the shifting of the second doors 40 from the second closed position to the second open position, is driven with an acceleration greater than the acceleration of gravity which acts on the product in such a way that during the movement of the doors the product is free in the air and can fall downwards without any hindrance. This invention brings important advantages.

Indeed, thanks to this invention it was possible to provide a gripping head for the movement of products, and a movement device which comprises it, which allow mechanisation and automation, with suitable electronic control of the various parts, of the packaging operations which are currently performed manually by operators.

Finally, it should be noticed that this invention is relatively easy to produce and that even the cost linked to implementing the invention is not very high.

The invention described above may be modified and adapted in several ways without thereby departing from the scope of the inventive concept.

All details may be substituted with other technically equivalent elements and the materials used, as well as the shapes and dimensions of the various components, may vary according to requirements.

## Claims

1. A gripping head for the movement of products comprising a supporting body (13) mountable on a movable member (4) of a movement device (2) for the movement of products, and an operating body (12) which is connected to the supporting body (13) and which comprises a main frame (16), wherein:
the operating body (12) is rotatably mounted on the supporting body (13) according to a main axis of rotation (8);
the operating body (12) has a first operating side (17) and a second operating side (18) which are positioned on opposite sides of the operating body (12) and which identify respective lying planes substantially parallel to each other and to the main axis of rotation (8);
the operating body (12) can rotate relative to the supporting body (13) by an angle of 180° around the main axis of rotation (8), between a first position at which the gripping head (1) can pick up and/or release a product at the first operating side (17), and a second position at which the gripping head (1) can pick up and/or release the product at the second operating side (18) of the operating body (12);
the operating body (12) also comprises first retaining means (19) associated with the main frame (16) and positioned at the first operating side (17) and second retaining means (20) associated with the main frame (16) and positioned at the second operating side (18), between the first retaining means (19) and the second retaining means (20) there being a housing (11) for the product to be moved;
the first retaining means (19) are switchable between a first open configuration in which they allow the passage of the product from and towards the housing (11), and a first closed configuration in which they prevent the passage of the product;
the second retaining means (20) are switchable between a second open configuration in which they allow the passage of the product from and towards the housing (11), and a second closed configuration in which they prevent the passage of the product.

2. The gripping head according to claim 1, wherein the first retaining means (19) comprise two retaining elements (21) which are movable between an operating position, in which they are near, and a home position in which they are spaced apart.

3. The gripping head according to claim 2, wherein each retaining element (21) has a front edge (22) directed towards the other retaining element (21), the two front edges (22) extending along parallel straight lines.

4. The gripping head according to claim 2 or 3, wherein the two retaining elements (21) are movable relative to each other along respective movement trajectories which comprise a component of translation parallel to the lying plane of the first operating side (17).

5. The gripping head according to claim 3, wherein the two retaining elements (21) are movable relative to each other along respective movement trajectories which comprise a component of translation parallel to the lying plane of the first operating side (17), and wherein said component of translation is perpendicular to said lines along which the front edges (22) extend.

6. The gripping head according to claim 4 or 5, wherein, during the movement of the retaining elements (21) between the operating position and the home position, the front edges (22) translate while remaining substantially in a same translating plane (24) parallel to the lying plane of the first operating side (17).

7. The gripping head according to any one of claims 2 to 6, wherein, during the movement between the operating position and the home position, the retaining elements (21) each perform a roto-translation relative to the main frame (16).

8. The gripping head according to any one of claims 2 to 7, wherein the retaining elements (21) move in a synchronised way between the home position and the operating position.

9. The gripping head according to any one of claims 1 to 8, wherein the first retaining means (19) comprise two first doors (23) which are each rotatable around a respective first axis of rotation, each first door (23) being able to rotate between a first closed position, and a first open position the first axes of rotation being parallel to each other.

10. The gripping head according to claim 9 when it depends on claim 2, wherein each retaining element (21) comprises a first frame (25) and one of the first doors (23), wherein the first frame (25) is movably connected to the main frame (16) so that it can move between the home position and the operating position, and wherein said one of the first doors (23) is hinged to the first frame (25) according to the respective first axis of rotation and can rotate, relative to the first frame (25), between the first closed position and the first open position.

11. The gripping head according to claim 10 wherein:
each first door (23) can rotate between the first closed position and the first open position when the respective retaining element (21) is in the operating position;
the retaining elements (21) can move between the operating position and the home position when the first doors (23) are in the respective first closed positions;
the first retaining means (19) are in the first closed configuration when the retaining elements (21) are in the operating position and the first doors (23) are in the first closed position; and
the first retaining means (19) can adopt two different first open configurations in which, alternatively, the first doors (23) are in the first open positions or the retaining elements (21) are in the home position.

12. The gripping head according to any one of claims 1 to 11, wherein the second retaining means (20) comprise a second frame (39) connected to the main frame (16) and at least one second door (40) mounted on the second frame (39) and movable, relative to the second frame (39) between a second closed position, which it adopts when the second retaining means (20) are in the second closed configuration, and a second open position which it adopts when the second retaining means (20) are in the second open configuration.

13. The gripping head according to claim 12, wherein the second retaining means (20) comprise two second doors (40) hinged to two opposite edges of the second frame (39), along respective second axes of rotation which are parallel to each other, each second door (40) rotating, relative to the second frame (39), between the second closed position and the second open position around the respective second axis of rotation.

14. The gripping head according to any one of claims 1 to 13 wherein the second retaining means (20) are movable relative to the first retaining means (19) between a spaced apart position, which corresponds to a maximum size of the housing (11), and a near position which corresponds to a minimum size of the housing (11).

15. The gripping head according to claim 14, wherein the second retaining means (20) are also configured to tilt relative to the first retaining means (19) and to adopt any position between the spaced apart position and the near position.

16. The gripping head according to claim 14 or 15 when they depend on claim (12), wherein the second frame (39) is movable relative to the main frame (16) between the spaced apart position and the near position.

17. The gripping head according to claim 16, wherein the second frame (39) is connected to the main frame (16) by means of two connecting joints (45) which are placed on opposite edges of the second frame (39) and are aligned along an alignment line, each connecting joint (45) being movable, independently of the other connecting joint (45), perpendicularly to the lying plane of the first operating side (17), and the two connecting joints (45) being configured to allow an oscillation of the second retaining means (20) both around the connecting line and around an axis perpendicular to it and parallel to the lying plane of the second operating side (18).

18. A device for the movement of products comprising:
a supporting structure (3);
a movable member (4) mounted on the supporting structure (3); and
a gripping head (1) according to any one of claims 1 to 17, mounted on the movable member (4);
wherein the movable member (4) is movable between a pick-up position, at which the gripping head (1) is placed at a pick-up station (5), and a releasing position at which the gripping head (1) is placed at a releasing station (6).

19. The device according to claim 18 wherein the gripping head (1) is rotatably connected to the movable member (4) along a secondary axis of rotation (7) orthogonal to the main axis of rotation (8), so as to rotate at least 180° around the second axis of rotation.
